# EUROPEAN PATENT APPLICATION

(11) **EP 2 572 898 A2**
(43) Date of publication of application: **27.03.2013**
(21) Application number: 12185604.1
(22) Date of filing: 24.09.2012
(51) Int. Cl.: B60B 7/20

(54) **Wheel cap**

(30) Priority: 24.09.2011 GB 201116588
(71) Applicant: Woodall, Gloria, Buckinghamshire SL1 8BQ (GB)
(72) Inventor: Woodall, Gloria, Buckinghamshire SL1 8BQ (GB)
(74) Representative: Pugsley, Victoria Antonietta

(57) **Abstract**

A wheel cap for attaching e.g. to a wheelchair wheel comprises a fixing piece (1) that is adapted for attachment to the wheel and an outer piece (6) that is connected to the fixing piece (1) by means of a rotatable connection (4, 5). The wheel cap comprises a first portion and a second portion that are reversibly attachable to each other. The second portion is typically a cap provided on the outer piece (6).

## Description

### Field of the invention

The present invention relates to wheel caps, in particular to decorative wheel caps.

### Background to the invention

It is accepted that there are as many types of wheelchair users as there are non-wheelchair users. However there are a limited number of types or styles of wheelchairs available to users.

Individualised or customised wheelchairs for performance are known for athletes or other active users. These include creating special wheelchairs for dance, with a centre of gravity that helps a user perform complicated manoeuvres with ease, or rugby players' wheelchairs that can take an impact without damaging the wheelchair or user.

However despite public or private funding assistance and increased workplace access in progressive societies, many variations or personalisations of wheelchairs available tend to be beyond financial capabilities of many typical users.

For example temporary wheelchair users, such as those with a temporary decreased motor facility in their legs due to an accident, will often be supplied with standard issue multiple user wheelchairs as are many eldery.

Users therefore may need to subjugate their individuality or personality in respect to their wheelchair.

Wheelchairs typically have spokes which can be hazardous for fingers or clothing snagging. Spoke guards are known such as thin plastic covers or guards that are attached to the wheels of the chair with hook and loop such as VELCRO (TradeMark). Spoke guards come in assorted designs, sizes and colours or can be design by the user, and add personality and individuality to a wheelchair once attached.

JP2000262562 describes a wheel cover for a wheelchair which can cover the spoke part of a wheel of a wheelchair with a simple structure and can be easily fitted on and removed from the side part of the wheel by anyone and can be kept under static condition even when the wheel is rotated and can improve appearance of the wheelchair.

### Summary of the invention

At its most general, the present invention may provide a wheel cap that is readily divided into separate portions. Thus, for example, an outer decorative portion may easily be detached from the remainder of the wheel cap and substituted by a replacement portion carrying a different design.

In a first aspect, the present invention may provide a wheel cap comprising a fixing piece that is adapted for attachment to a wheel and an outer piece that is connected to the fixing piece by means of a rotatable connection,
wherein the wheel cap comprises a first portion and a second portion that are reversibly attachable to each other.

By providing a wheel cap that comprises reversibly attachable first and second portions, one portion of the wheel cap may be readily replaced while the other portion (in general, the portion comprising the fixing piece) remains in place on the wheel. This may allow the decorative elements of a wheel cap to be changed quickly and easily, without the need to remove the fixing piece from the wheel. Thus, a fixing piece may be provided that is adapted to be permanently and securely attached to the wheel. Furthermore, the decorative effect provided by the wheel cap may readily be changed without the requirement to provide an entirely new wheel cap, thus reducing the total amount of material required.

The rotatable connection allows the fixing piece and the outer piece to be rotated relative to each other. Thus, when the wheel cap is in place on a wheel, the rotatable connection may allow a design on the outer piece to be more easily viewed by an observer, since the outer piece does not rotate with the wheel.

Typically, the second portion corresponds to a subsection of the outer piece. That is, the interface between the first and second portions is located within the outer piece. The second portion may be e.g. a disc-shaped cover that may provide a safety cover for the wheel (to help prevent a person's fingers being caught in the spokes of the wheel) and/or a decorative element for the wheel.

In certain embodiments, the disc-shaped cover may comprise a plurality of elements that are reversibly attachable to each other. This may allow the decorative effect provided by the disc-shaped cover to be changed without the need to provide an entirely new disc-shaped cover. Thus, the total amount of material required is further reduced.

Typically, the first and second portions are reversibly attachable by means of magnetic interaction. For example, the second portion may comprise magnetic elements that are attracted to ferromagnetic sections of the first portion. Additionally or alternatively, the first and second portions may be reversibly attachable by means of clips, resiliently deformable interlocking elements, and/or friction fit between interlocking elements.

In addition, the first and second portions may comprise interlocking features for allowing location of the second portion on the first portion.

Preferably, the outer piece comprises a counterweight, such that the outer piece is biased towards a position in which the counterweight lies beneath the axis of rotation of the rotatable connection. This arrangement helps to ensure that when the wheel cap is mounted on a wheel, the outer piece remains stationary as the wheel is turned. This helps to ensure that any decorative element on the outer piece may easily be observed by a viewer.

In general, the fixing piece comprises a central aperture for allowing the axle of a wheel to remain uncovered by the fixing piece when the fixing piece is fitted to the wheel. Thus, the fixing piece may be e.g. annular. This arrangement helps to ensure that the fixing piece does not block access to a quick-release mechanism on the wheel, which is typically located at the wheel axle. In this way, a wheel of e.g. a wheelchair may be removed without the need first to detach the fixing piece from it.

Typically in this case, the outer piece comprises a linking element that is connected to the fixing piece by means of the rotatable connection and a cover that is distal to the fixing piece and reversibly attachable to the linking element, wherein the linking element comprises a respective aperture for allowing the axle of a wheel to remain uncovered by the linking element when the fixing piece is fitted to the wheel. Thus, once the cover of the wheel cap is removed, any quick-release mechanism in the wheel may readily be activated by the user, simply in that the user passes his or her hand through the respective apertures of the linking element and fixing piece.

Typically in this case, the rotatable connection comprises a plurality of rollers that are offset from the axis of rotation of the rotatable connection, that is, the rollers may be arranged radially outwardly of the apertures of the linking element and fixing piece.

These arrangements may assist in allowing the wheels of e.g. a wheelchair to be readily removed for transportation or storage e.g. in a taxi or minicab.

Preferably, the fixing piece comprises a plurality of openings to allow the fixing piece to be attached to a wheel by means of ties securing the fixing piece to the spokes of the wheel. Typically, these openings are smaller than the central aperture of the fixing piece. In general, the openings are distributed around the outer perimeter of the fixing piece.

Preferably, the wheel cap is adapted for mounting on a wheelchair wheel, where it may assist in providing a decorative element for the wheel and/or may help prevent the user's fingers being caught in the spokes of the wheel. Alternatively, the wheel cap may be adapted for fitting on other wheels e.g. a tricycle wheel, a go-kart wheel, or a pram wheel.

In certain embodiments, the fixing piece may comprise printed markings, engravings, or notches to assist in centring the fixing piece on the wheel. Additionally or alternatively, the fixing piece may comprise clips or other resilient elements that help to ensure that the fixing piece is affixed onto the wheel at the required position. In certain cases, the fixing piece may comprise a template for this purpose, wherein the template may be reversibly attached to the fixing piece e.g. through the provision of a low tack adhesive.

Further embodiments may for example include helically or spirally arranged projections that allow the fixing piece to be screwed into the spokes, simultaneously leading to centring as the piece is screwed onto the spokes and the helically disposed projections push the piece towards a centrepoint progressively.

In a second aspect, the present invention may provide a kit comprising a first portion and a second portion that may be attached to each other to provide a wheel cap according to the first aspect of the invention. Preferably, the kit comprises a plurality of such second portions that may be interchangeably attached to the first portion.

The invention according to the second aspect may include one or more optional features of the invention according to the first aspect.

In a third aspect, the present invention may provide a method of mounting a wheel cap according to the first aspect of the invention on a wheel, the method comprising the step of providing a template on the wheel or the fixing piece to indicate the required position for the fixing piece relative to the wheel.

This procedure may aid in centring the fixing piece on the wheel.

The template may be attached to the wheel or the fixing piece by means of an adhesive.

Preferably, the template is reversibly attached to the wheel or the fixing piece, such that it may be removed after the fixing piece has been affixed to the wheel.

In certain embodiments, the template may be provided through markings on the wheel or the fixing piece, e.g. printed markers or notches. Additionally or alternatively, one or both of the wheel and the fixing piece may comprise clips or other resilient elements that help to ensure that the fixing piece is affixed onto the wheel at the required position.

In the case that the fixing piece comprises a central aperture, the template may be affixed to the perimeter of the aperture, e.g. by means of adhesive tabs. This may allow the template to be removed easily after the fixing piece has been affixed to the wheel.

### Detailed description

The invention will now be described by way of example with reference to the following

Figures in which:
Figure 1 shows an exploded perspective view of a fixing piece and a linking element that provide part (i.e. the first portion) of a wheel cap according to a first embodiment of the invention;
Figure 2 shows a perspective view of a cover that is reversibly attachable to the linking element shown in Fig. 1, to provide a wheel cap according to a first embodiment of the invention;
Figure 3a shows a plan view of the fixing piece and linking element of Figure 1, assembled to provide the first portion of a wheel cap;
Figure 3b shows a perspective view of the wheel cap portion of Fig. 3a;
Figure 4a shows a further perspective view of the wheel cap portion of Fig. 3a;
Figure 4b shows a side view of the wheel cap portion of Fig. 3a.

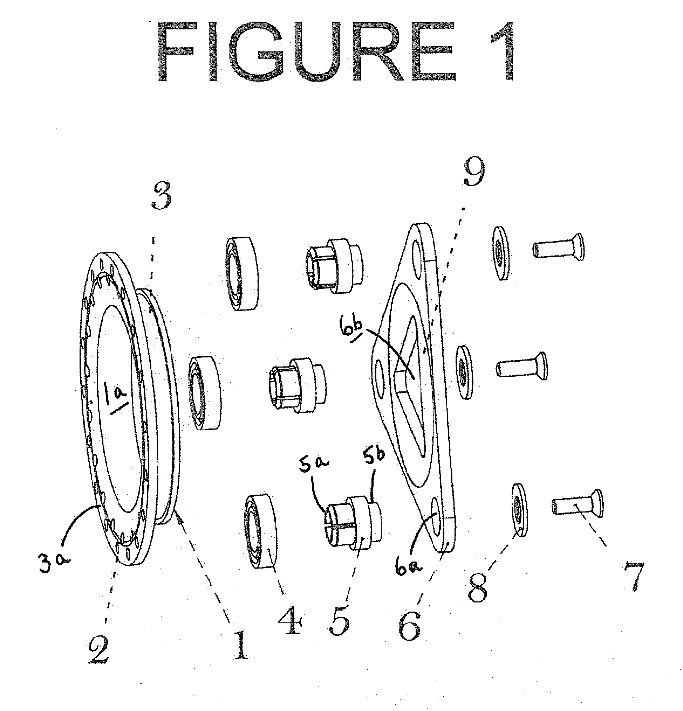

Referring to Fig. 1, a fixing piece 1 has an annular shape that defines a central aperture 1 a. A channel 3 extends around a radially outer surface of the fixing piece. The fixing piece further comprises a flange 3a that extends radially outwardly from one side of the channel 3. A plurality of openings 2 is disposed around the outer perimeter of the flange 3a.

The channel 3 is adapted to receive three cylindrical rollers 4, each having a respective central aperture.

A triangular connection plate 6 provides a linking element and has outer apertures 6a, each outer aperture being located at a respective apex of the plate. The connection plate 6 also has a central aperture 6b that has a truncated triangular shape. Fasteners 5 are adapted to join the connection plate 6 to the rollers 4. Each fastener has a first engagement portion 5a that is adapted to fit in the central aperture of a respective roller 4, and a second engagement portion 5b that is adapted to fit in a respective outer aperture 6a of the connection plate. The first and second engagement portions are shaped as hollow cylinders, the first engagement portion 5a having a plurality of longitudinal slits. Studs 7 are each adapted to pass through a respective washer 8, and to be received in a respective second engagement portion 5b of a fastener 5.

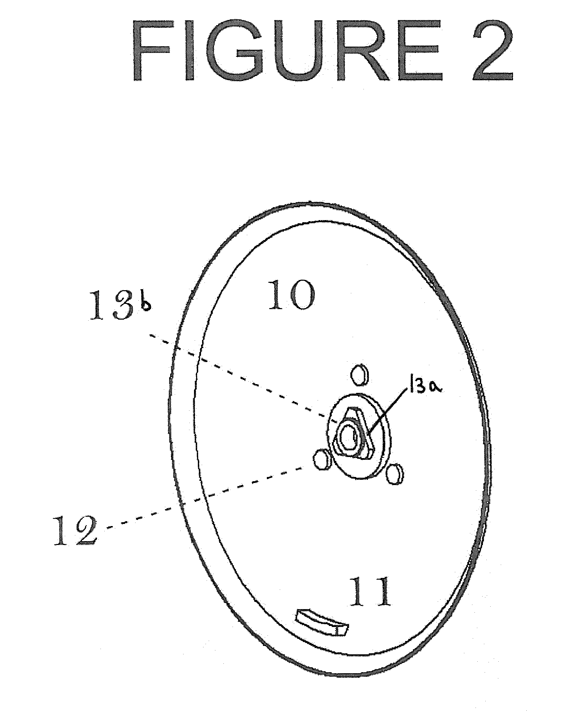

Referring to Fig. 2, a disc 10 has a counterweight 11 that is located at a radially outer position of the disc. The disc further has a first projection 13a that is located at the centre of the disc and extends in an axial direction. The first projection 13a has a truncated triangular shape. A second projection 13b is located on the first projection and has a cylindrical shape. Three magnets 12 are disposed radially outwardly of the centre of the disc 10, each magnet being located at the apex of a notional equilateral triangle.

In use, the fixing piece is secured to a wheel (e.g. the wheel of a wheelchair) by means of cable ties that pass through the openings 2 on the flange 3a and secure the flange to the spokes of the wheel. The connection plate is secured to the fixing piece by means of the fasteners 5: the first portion 5a of each fastener is held within the aperture of a respective roller 4, which is itself held by the channel 3. Meanwhile the second portion 5b of each fastener is held within a respective outer aperture 6a of the connection plate and is secured to the plate by means of a respective stud 7 that passes through a respective washer 8 and is held within the second portion 5b of the fastener. The close fit between the first portion 5a and the respective roller 4 is enhanced by the longitudinal slits in the first portion 5a, as these decrease the stiffness of the first engagement portion and allow the first engagement portion 5a to be resiliently held within the roller 4.

The disc 10 is held on the connection plate 6 by means of magnetic interaction between the magnets 12 and the ferromagnetic material of the plate 6. The first and second projections 13a,13b aid location of the disc onto the plate 6. The magnetic connection of the disc with the connection plate allows the disc to be reversibly attached to the connection plate.

Due to the provision of rollers 4 which are able to roll along the fixing piece channel 3, the connection plate 6 and disc 10 are rotatably connected to the fixing piece 1. Thus, the fixing piece rotates with the wheel to which it is secured, while the rotation of the connection plate 6 and disc 10 remains independent of the rotation of the fixing piece 1. The counterweight tends to remain below the axis of rotation of the disc 10, such that the orientation of the disc 10 remains substantially fixed, regardless of the rotation of the wheel to which the wheel cap is attached.

The following paragraphs may be useful in understanding the invention:
The present invention may provide a means of customising a wheelchair effectively and simply, in a manner that is easy to attach, detach and centre, and provides personalisation and modernity, whilst providing a facility to communicate a message to others.
The present invention may provide a wheelchair wheel cap including a disc and a hub, wherein in use the hub may rotate in respect to the disc, said rotation being about a centre common to the disc and hub.
According to a second aspect of the present invention, the disc may be weighted to maintain a position relative to the hub, even when the hub is under rotation.
In preferred embodiments the hub may be formed in at least two pieces, wherein a first piece is semi-permanently attached to the wheelchair, wheel or spokes. More particularly the hub itself may be divisible, supplied and/or mountable into, or in, two pieces.
Ideally the method of attachment of the hub or a first piece of the hub is using cable ties, such as nylon ties. In this way in some embodiments the first hub piece may be left in place whilst a second piece may be removed at will. This second piece preferably interfaces with the first via a resiliency deformable connection, for example where some of the piece is displaced or the piece is deformed to allow connection of the pieces.
Embodiments are preferred wherein corresponding male and female locating parts permit a disc to be located on the second piece, and furthermore bearings are contained or are included in the connection between the pieces in order that the disc and second piece may rotate about the first piece.
Thereby, the second piece may be able to rotate within or in relation to the first piece and wheel centre and the second piece remains fixed in relation to the disc.
Ideally the bearings may be contained within the second piece.
Such a plural arrangement may allow bearings to be separated from the wheelchair and/or the disc to be changed cheaply, however as according to cost concerns in some embodiments the pieces may be combined.
The fixing between the second piece and the disc may include or comprise opposing magnetic portions and/or friction fitting and/or clip- or resiliency deformable seals or member fitting. Preferably at least three corresponding magnets are provided.
According to a third aspect of the present invention the first piece may provide in use a central lacuna wherein this lacuna allows a user to view and reach through the lacuna in order to engage, disengage or activate a wheelchair's quick release wheel mechanism, which is typically activated at the axle or wheel centre.
For example the first piece may be attached in use to spokes, wherein the first piece constitutes a ring shape attached to individual or groups of spokes in a plurality of situations about the ring circumference; leaving a central lacuna for access to the wheel axle, wheel centre point, or quick release mechanism.
The ring may be circular or other shape as preferred and as disposed to aid centring on the wheel.
It is envisaged in use that this lacuna may be closed or blocked by the disc, and accordingly embodiments are incorporated within the spirit of the invention whereby the hub includes elements that transgress into the lacuna when the disc is in place, for example sprung arms, members or clasps that may be used to hold the disc in place.
In this way the wheels may be readily removed for transportation or storage, for example by taxi or minicab drivers.
Other complimentary, additional or other methods may be included to aid or ensure correct centring of the cap over the wheel. These may preferably include or comprise templates or targets.
In the preferred embodiment in use the user would place the hub or hub piece onto the wheel and over the template or target, through which the centre or mechanism would be visible.
This template may be attached previously to the wheel; such as by an adhesive, or may be removably in place on the hub or hub piece.
Temporary and/or prior attachment of the template to the hub may be achieved by inclusion of adhesive tabs which engage with the hub or hub piece.
Said tabs may be orthogonally disposed to the template's main function or body and likely to fit around or within the lacuna in use, in order that after use for centring, the template may be withdrawn from the lacuna with minimal disturbance.
Further embodiments may for example include helically or spirally arranged projections that allow the hub, or piece of, to be screwed into the spokes, simultaneously leading to centring as the piece is screwed onto the spokes and the helically disposed projections push the piece or hub towards a centrepoint progressively.
Other methods for centring may be envisaged such as splayed fingers or clips, markings, measurements, rulers or gauges - printed, notched or removably written on the hub or hub piece.
Furthermore in preferred embodiments the disc may also constitute separate, or separable sections, for example in order that a disc section may be replaced as required without replacing the disc itself.
In this way a cap may be substantially altered by alteration of the disc alone. For example where the cap is in use in a sporting arena numbers on a disc or disc section may be replaced quickly and with minimal cost or disturbance.
These sections or discs or shields may be attached by magnets, hook and loop or friction fit. It may be envisaged in some embodiments that different sections of the disc may be free or enabled to rotate differently or not at all. This may be accomplished by use of multiple bearings and/or further pieces or sections.
The invention has been described by way of examples only and it will be appreciated that variation may be made to the above-mentioned embodiments without departing from the scope of invention.
With respect to the above description then, it is to be realised that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.
Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

### Brief Description of Figures

Figure 1 shows an isometric exploded view of a preferred embodiment of the hub;
Figure 2 shows an isometric view of a preferred embodiment of the disc;

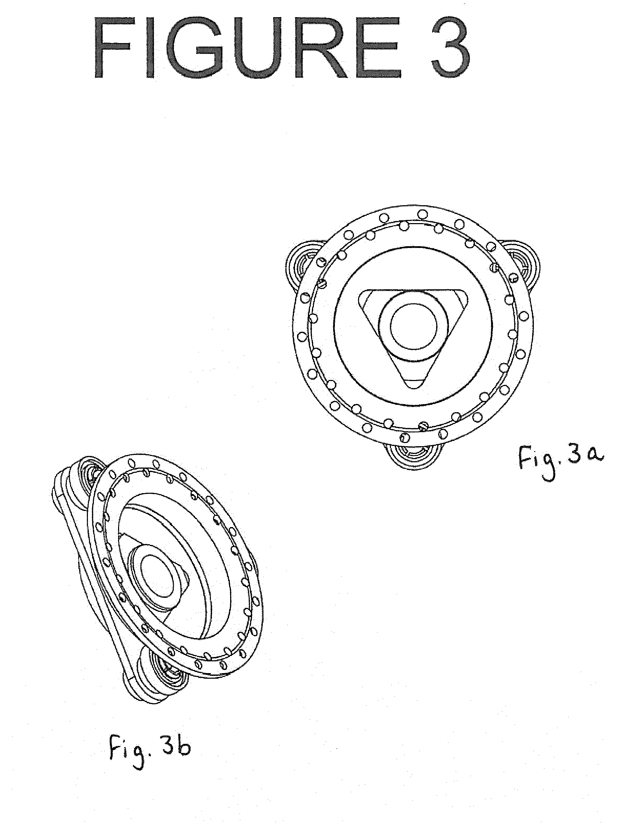

Figures 3 show two isometric views of a preferred embodiment of the hub and attached disc, wherein the disc surface is transparent and the wheel is not shown; and

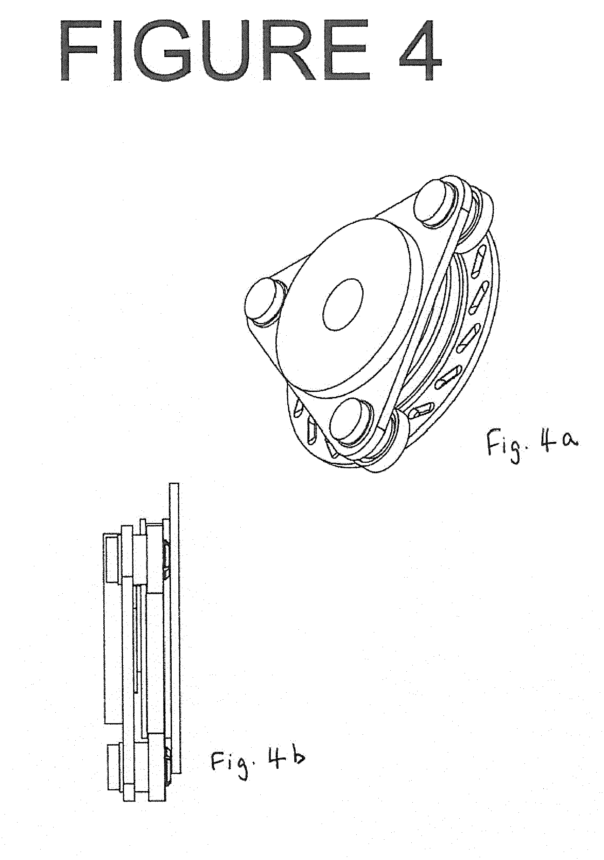

Figures 4 show two isometric views of a preferred embodiment of the hub and attached disc, wherein the disc surface is transparent and the wheel is not shown.

### Detailed Description of Figures

The cap comprises a circular disc surface mounted on a wheelchair wheel, in use, concealing the wheel spokes.

The pictured and preferred embodiment of the cap is comprised or supplied in a minimum of two portions, a hub {as shown in Figure 1) for attachment to the wheel, and a circular disc (as shown in Figure 2).

fn Figure 1 the components of the preferred embodiment of the hub are shown, including a first piece or wheel engagement portion (1) having a plurality of holes (2) through which ties or similar may be interlaced in order to hold the piece 1 to a wheel or wheel spokes, and including a channel (3) wherein in said channel in use run rollers (4); which rollers are clipped onto deformably resilient clips (5).

These studs are held in a plate (6) through which metallic studs (7) passing through washers (8).

The plate 6 is provided with triangular and circular female locating parts (9), The parts 4 to 9 may comprise a separate or separable second piece.

The disc 10 may be injection moulded with inserts that are screen printed displaying the user's desired image on the disc's surface.

In the pictured and preferred embodiment moulded into the disc is a counterweight (11) used to ensure that the disc to appear to remain in a stationary position whilst the wheel and the hub are spun.

Ideally the hub is attached to the wheel of the chair via the wheel's spokes and fasteners such as nylon ties.

Three magnets (12) for mounting the disc 10 to the studs (7), wherein the magnets correspond with the studs (7).

In order to ensure that the disc fits securely and correctly onto the second piece two male projections (13) are provided, namely a circular projection for initial location and a triangular projection for final location, corresponding with two female indentations on the second piece of the hub, together ensuring that the disc is centrally located and the magnets correspond correctly.

### Clauses

1. A wheelchair wheel cap including a disc and a hub, wherein in use the hub may rotate in respect to the disc, said rotation being about a centre common to the disc and hub.
2. A cap according to clause 1 wherein the disc is weighted to maintain a position relative to the hub.
3. A cap according to clauses 1 or 2 wherein the disc attaches to the hub by use of magnetic portions.
4. A cap according to clauses 1 to 3 wherein when the disc is detached from the hub the hub has a central lacuna to allow access to a wheel axte.
5. A cap according to any preceding clause wherein at least a piece of the hub is disposed to rotate with the disc.
6. A cap according to any preceding clause wherein the hub and disc have corresponding male and female parts.
7. A cap according to any preceding clause wherein the disc includes a separable section.

## Claims

1. A wheel cap comprising a fixing piece that is adapted for attachment to a wheel and an outer piece that is connected to the fixing piece by means of a rotatable connection,
wherein the wheel cap comprises a first portion and a second portion that are reversibly attachable to each other.

2. A wheel cap according to claim 1, wherein the second portion corresponds to a subsection of the outer piece.

3. A wheel cap according to claim 2, wherein the second portion is a disc-shaped cover.

4. A wheel cap according to claim 3, wherein the disc-shaped cover comprises a plurality of elements that are reversibly attachable to each other.

5. A wheel cap according to any one of the preceding claims, wherein the first and second portions are reversibly attachable by means of magnetic interaction.

6. A wheel cap according to any one of the preceding claims, wherein the first and second portions comprise interlocking features for allowing location of the second portion on the first portion.

7. A wheel cap according to any one of the preceding claims, wherein the outer piece comprises a counterweight, such that the outer piece is biased towards a position in which the counterweight lies beneath the axis of rotation of the rotatable connection.

8. A wheel cap according to any one of the preceding claims, wherein the fixing piece comprises an aperture for allowing the axle of a wheel to remain uncovered by the fixing piece when the fixing piece is fitted to the wheel.

9. A wheel cap according to claim 8, wherein the outer piece comprises:
a linking element that is connected to the fixing piece by means of the rotatable connection; and
a cover that is distal to the fixing piece, the cover being reversibly attachable to the linking element,
wherein the linking element comprises a respective aperture for allowing the axle of a wheel to remain uncovered by the linking element when the fixing piece is fitted to the wheel.

10. A wheel cap according to claim 8 or claim 9, wherein the rotatable connection comprises a plurality of rollers that are offset from the axis of rotation of the rotatable connection.

11. A wheel cap according to any one of the preceding claims, wherein the fixing piece comprises a plurality of openings to allow the fixing piece to be attached to a wheel by means of ties securing the fixing piece to the spokes of the wheel.

12. A wheel cap according to claim 11, wherein the openings are distributed around the outer perimeter of the fixing piece.

13. A wheel cap according to any one of the preceding claims, the wheel cap being adapted for mounting on a wheelchair wheel.

14. A kit comprising a first and second portion that are reversibly attachable for assembly into a wheel cap according to any one of the preceding claims.

15. A method of mounting a wheel cap according to any one of the preceding claims on a wheel, the method comprising the step of providing a template on the wheel or the fixing piece to indicate the required position for the fixing piece.
